# EUROPÄISCHE PATENTSCHRIFT

(11) **EP 0 296 333 B1**
(45) Veröffentlichungstag und Bekanntmachung des Hinweises auf die Patenterteilung: **28.07.1993**
(21) Anmeldenummer: 88106534.6
(22) Anmeldetag: 23.04.1988
(51) Int. Cl.: B29C 61/02, B29C 61/00

(54) **Vorrichtung zur Wärmebehandlung von radialschrumpfenden Wärmeschrumpfschläuchen**
Apparatus for heat-treating radially shrinking heat-shrinkable sleeves
Dispositif de traitement thermique de manchons thermorétractables qui se contractent radialement

(30) Priorität: 24.06.1987 DE 8708736 U
(43) Veröffentlichungstag der Anmeldung: 28.12.1988
(73) Patentinhaber: DSG Schrumpfschlauch GmbH, D-53340 Meckenheim (DE)
(72) Erfinder: Arenz, Helmut, D-5305 Alfter-Impekoven (DE)
(74) Vertreter: Schwarz, Klaus-Jürgen, Dipl.-Ing.

(56) Entgegenhaltungen:
- EP-A- 0 263 980
- GB-A- 1 199 264
- GB-A- 2 184 051

## Beschreibung

Die Erfindung betrifft eine Vorrichtung zur Wärmebehandlung von radialschrumpfenden Wärmeschrumpfschläuchen mit thermoplastischem Schmelzkleber zur stellenweisen Abdichtung von Kabelbündelabschnitten, insbesondere bei vorgefertigten Kabelbäumen im Fahrzeugbau, wobei das an der Abdichtungsstelle zwischen den Kabelsträngen mit einem Schmelzklebereinsatz versehene und mit einem Wärmeschrumpfschlauch oder einer Wärme-Schrumpfkappe ummantelte Kabelbündel erwämt wird, und wobei die Vorrichtung eine die Abdichtstelle an dem Kabelbündelabschnitt allseitig zangenartig umschließende Wärmekammer aufweist, deren Kammerteile gegeneinander schwenkbar angeordnet und aus einer Ruhestellung neben dem Kabelbündelabschnitt in eine Arbeitsstellung und aus dieser in die Ruhestellung wieder zurückbewegbar sind.

Im Fahrzeugbau und ähnlichen Produktionsbereichen werden die Kabel für die elektrischen Verbraucher und für elektrische Meß-, Anzeige- und Steuerungseinrichtungen zwischen den jeweiligen Anschlußstellen in Form von Kabelbäumen verlegt. Dabei bereitet die einwandfreie Abdichtung der einzelnen Anschlußstellen gegen Eindringen von Feuchtigkeit und Korrosion insofern erhebliche Schwierigkeiten, als die einzelnen Kabelstränge in den Kabelbäumen nicht über ihre gesamte Länge abgedichtet werden können. Eine Abdichtung von Hand kommt in der Serienfertigung wegen des damit verbundenen großen Zeitaufwandes und der dadurch bedingten Herstellungskosten nicht in Frage, so daß bei den in der Serienfertigung bisher angewandten Abdichtungsmethoden auch bei sorgfältigster Abdichtung an den Abdichtstellen zwischen den einzelnen Kabelsträngen des Kabelbündels kapillare Spalten und Poren verbleiben, durch die insbesondere unter der Einwirkung des bei höheren Fahrgeschwindigkeiten auftretenden Luftwiderstandes und des dadurch bedingten Unterdruckes in den Kabelbäumen Umgebungsfeuchtigkeit in das Innere der Kabelbäume eintreten kann, so daß die Hohlräume in den Kabelbäumen zwischen den Kabelsträngen nach einiger Zeit vollständig mit Wasser gefüllt sind, das dann an den Austrittsstellen der Kabelstränge aus dem Kabelbaum wieder nach außen gelangt und an den einzelnen Kabelsträngen entlang zu den Kabelanschlüssen wandert, um deren Funktionsfähigkeit zu beeinträchtigen. Da die Auffindung und die Behebung solcher Fehlerquellen einen hohen Aufwand erfordert, gewinnt die Beseitigung dieser Schwierigkeiten mit der zunehmenden Elektrifizierung im Fahrzeugbau ständig an Bedeutung.

Aus GB-A-1 199 264 ist eine Vorrichtung zur Wärmebehandlung von radialschraumpfenden Wärmeschrumpfschläuchen bekannt, mit der das mit einem Wärmeschrumpfschlauch ummantelte Kabelbündel Wärme ausgesetzt wird, wobei die Vorrichtung als tragbares Handgerät mit den Kabelbündelabschnitt zangenartig umschließenden elektrischen Heizstrahlern ausgebildet ist, deren Zangenteile durch Handbetätigung einer Schiebetaste an einem Gehäuse gegeneinander bewegbar angeordnet und durch die tragbare Ausführung des Gerätes aus einer Ruhestellung neben dem Kabelbündelabschnitt in eine Arbeitsstellung und aus dieser wieder in die Ruhestellung zurückbewegbar sind.

Allerdings lassen sich mit einer solchen handbetätigten Vorrichtung mit elektrisch beheizten Heizstrahlern Kabelbäume, bei denen die einzelnen Kabelstränge mit einem Mantel aus radialschrumpfenden Wärmeschrumpfschläuchen umgeben sind, nicht in der erforderlichen Weise so behandeln, daß eine einwandfreie Abdichtung der einzelnen Anschlußstellen gegen Eindringen von Feuchtigkeit und Korrosion mit der notwendigen Sicherheit erzielt wird.

Aus GB-A-2 184 051 ist es zwar weiterhin bekannt, erhitzte Luft zum Erwärmen eines eine thermoplastische Bahn schneidenden Messers zu verwenden, ohne jedoch einen Hinweis zu geben, in welcher Form eine derartige Vorrichtung in Verbindung mit der Vorrichtung nach GB-A-1 199 264 zum Behandeln von radialschrumpfenden Wärmeschrumpfschläuchen nutzbar gemacht werden könnte.

Der Erfindung liegt die Aufgabe zugrunde, eine maschinelle Vorrichtung zur Wärmebehandlung von radialschrumpfenden Wärmeschrumpfschläuchen nach dem Oberbegriff des Anspruches 1 zu schaffen, mit der es in einfacher Weise möglich ist, sowohl die Eintrittsstellen der einzelnen Kabel als auch der einzelnen Austrittsstellen an Kabelbäumen, wie sie insbesondere im Fahrzeugbau verwendet werden, einwandfrei abzudichten, ohne daß eine Versiegelung der Kabelstränge über die gesamte Länge der Kabelbäume oder eine Behandlung der einzelnen Abdichtstellen von Hand erforderlich wäre.

Diese Aufgabe wird bei einer Vorrichtung nach dem Oberbegriff des Anspruches 1 gemäß der Erfindung dadurch gelöst, daß die Kammerteile der Wärmekammer am vorderen Ende eines mit einem Gebläse versehenen Warmluftkanals angeordnet und mit dem Warmluftkanal mittels eines Hubzylinders aus der Ruhestellung in die Arbeitsstellung an dem Kabelbündelabschnitt teleskopartig ausfahrbar sind.

Die erfindungsgemäße Vorrichtung hat den Vorteil, daß sie jeder Schrumpfaufgabe an Kabelsträngen und Kabelbäumen in einfacher Weise angepaßt werden kann, so daß sie sowohl örtlich als auch aufgabenmäßig universell einsetzbar ist. Die Wärmekammer der Vorrichtung fährt teleskopartig aus einer Ruheposition in eine Arbeitsstellung an den abzudichtenden Kabelsträngen oder Kabelbäumen und kehrt nach einer vorbestimmten Zeit wieder in die Ruhestellung zurück. Dadurch bleibt auch die Arbeitsstellung der Vorrichtung für jegliche Handhabungsarbeiten beim Zusammenstellen der Kabelstränge und Kabelbäume frei.

Da um das zu behandelnde Objekt eine Wärmekammer in Arbeitsstellung gebildet wird, werden optimale Schrumpfbedingungen in dem Schrumpfbereich insbesondere an der gesamten Oberfläche des zu behandelnden Objektes sichergestellt. Das Objekt wird durch die sich in der Arbeitsstellung schließenden Backen der Wärmekammer allseitig gleichmäßig umschlossen, und die Wärmekammer kann aufgrund ihrer einfachen Konstruktion vorzugsweise zusammen mit dem Teleskoprohr des Warmluftkanals mit wenigen Griffen leicht gegen eine andere größere oder kleinere Wärmekammer ausgewechselt werden.

Vorteilhaft ist es dabei auch, daß die Wärmekammer mit dem Warmluftkanal um eine zum Kabelbündelabschnitt parallele Achse schwenkbar gelagert ist. Dadurch, daß die Schrumpfvorrichtung aus der Ruhestellung um einen vorgegebenen Winkel schwenkt, in Arbeitsstellung fährt und nach der vorgegebenen Wärmebehandlungszeit wieder in ihre Ruhestellung zurückgeht, wird im Arbeitsbereich noch mehr Platz für Handhabungen an den Kabelsträngen und Kabelbäumen geschaffen.

Eine besonders vorteilhafte Konstruktion einer solchen Vorrichtung ergibt sich außerdem dadurch, daß der Warmluftkanal aus einem mit dem Gebläse fest verbundenen Heizrohr und einem daran längsverschiebbar geführten Teleskoprohr besteht, an dessen äußerem Ende die beiden Kammerteile der Wärmekammer um parallele Achsen quer zur Längsachse des Warmluftkanals gegeneinander bewegbar gelagert sind.

Besonders vorteilhaft ist es ferner, wenn die Kammerteile der Wärmekammer durch Trennwände in mindestens drei koaxial zu dem Kabelbündelabschnitt nebeneinanderliegende Warmluftkanäle derart unterteilt sind, daß der zu behandelnde Kabelbündelabschnitt im mittleren Teil der Wärmekammer von einem heißeren Warmluftstrom umströmt ist als in den daran seitlich angrenzenden Bereichen. Hierdurch können in der Wärmekammer der Schrumpfvorrichtung in Axialrichtung der zu behandelnden Kabelbündelabschnitte unterschiedliche Temperaturbereiche eingestellt werden, wobei in Umfangsrichtung bzw. radial um die zu behandelnde Abdichtstelle jeweils gleiche Temperaturen vorhanden sind.

Indem Temperaturfühler an der Wärmebehandlungsvorrichtung vorzugsweise in unmittelbarer Nähe des zu behandelnden Objektes angeordnet sind, kann die Lufttemperatur zur Durchführung des Schrumpfprozesses an den Abdichtstellen über eine geeignete Temperatursteuerung den jeweiligen Erfordernissen optimal angepaßt werden.

Der zu behandelnde Kabelstrang oder Kabelbaum kann durch geeignete Spannelemente, die an den Strangteilen bzw. an dem diese umschließenden Wärmeschrumpfschlauch beiderseits der Abdichtstelle angreifen, genau unter der Wärmekammer positioniert und ausgerichtet werden.

Indem die Klemmbacken der Spannvorrichtung auch während des Schrumpfprozesses verstellt werden können, wird eine bessere Klebeverteilung und auch eine schnellere Schrumpfung des Wärmeschrumpfschlauches im Abdichtbereich an dem Kabelstrang oder Kabelbaum erreicht.

Bevorzugte Ausführungsbeispiele der Erfindung sind in der Zeichnung schematisch dargestellt. Es zeigen
- Fig. 1: einen teilweise unterbrochen und weggebrochen dargestellten Abschnitt eines Kabelbaumes mit Abdichtstellen an den Ein- und Austrittsbereichen der einzelnen Kabelstränge und Kabelbündel,
- Fig. 2: eine vergrößerte Schnittdarstellung eines strichpunktiert abgegrenzten Abdichtungsbereiches II von Fig. 1,
- Fig. 3: einen Schnitt durch ein ummanteltes Kabelbündel gemäß Schnittlinie III-III von Fig. 2,
- Fig. 4: den in Fig. 2 dargestellten Abschnitt eines Kabelbündels nach einer Wärmebehandlung und der damit erreichten Abdichtung,
- Fig. 5: einen Schnitt durch das Kabelbündel von Fig. 4,
- Fig. 6: eine schematische Seitenansicht einer erfindungsgemäßen Vorrichtung zur Wärmebehandlung von radialschrumpfenden Wärmeschrumpfschläuchen in einer Ruheposition,
- Fig. 7: die Vorrichtung von Fig. 6 in Arbeitsstellung an einem zu behandelnden Kabelbündel und
- Fig. 8: eine teilweise geschnittene Draufsicht auf die Vorrichtung von Fig. 6 und 7 in Richtung der Schnittlinie bzw. in Richtung der Pfeile VIII-VIII von Fig. 7.

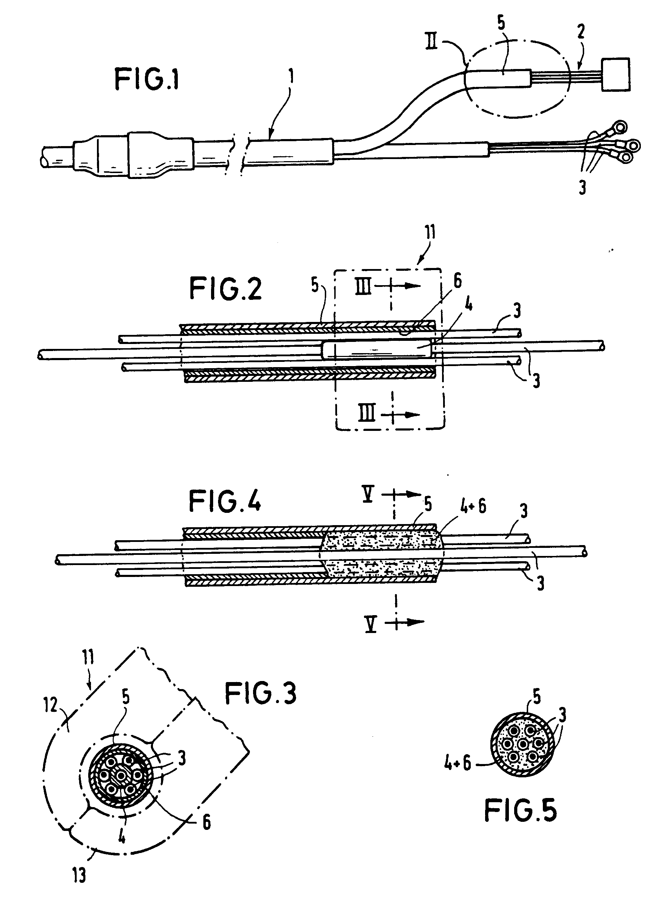

Wie in Fig. 1 bis 5 an Hand eines Kabelbaumes 1 im einzelnen zu erkennen ist, wird ein Kabelbündel 2, das aus mehreren Kabelsträngen 3 besteht, die unter Einfügung eines propfenartigen Schmelzklebereinsatzes 4 (Fig. 2 und 4) von einem radialschrumpfenden Wärmeschrumpfschlauch 5 umgeben sind, der an seiner Innenseite vorzugsweise mit einer Innenschicht 6 aus thermoplastischem Schmelzkleber versehen ist, einer Wärmebehandlung unterzogen. Die zwischen den einzelnen Kabelsträngen 3 vorhandenen Zwischenräume werden hierbei also an einer vorbestimmten Abdichtstelle mit Kunstmasse verfüllt, indem zwischen den Kabelsträngen 3 ein Kunststoffelement aus einem thermoplastischen Schmelzkleber plaziert wird, das bei Erwärmung schmilzt, aufschäumt und dabei geschlossene Poren bildet.

Auf das Kabelbündel 2 ist ein radialschrumpfender Wärmeschrumpfschlauch 5 mit thermoplastischem Innenkleber aufgeschoben.

Der abzudichtende Kabelbündelabschnitt (Bereich II von Fig. 1 und Fig. 2) wird einer Wärmebehandlung zum Aufquellen des eingebetteten Kunststoffelementes 4 sowie zum Aktivieren des thermoplastischen Schmelzklebers und zum Zurückschrumpfen des Schrumpfschlauches 5, eng um das Kabelbündel 2 herum, unterzogen.

Die gegenläufigen Bewegungen des aufquellenden Kunststoffelementes 4 aus thermoplastischem Schmelzkleber und des radialschrumpfenden Schrumpfschlauches 5 erzeugen einen Druck, wodurch der Schmelzkleber in die Hohlräume zwischen den einzelnen Kabelsträngen 3 eindringt und dabei eine Längswasserabdichtung erzeugt.

Derartige Längswasserabdichtungen sind insbesondere im Fahrzeugbau erforderlich, wo häufig das Problem zu lösen ist, vieladrige Kabelbündel 2, wie Kabelbäume, in vorbestimmten Abschnitten längswasserdicht auszubilden.

Dieses Problem stellt sich beispielsweise, wenn in einem Kabelbaum ein Steckersystem angebracht ist, oder wenn der Kabelbaum durch eine trennwand hindurch, zum Beispiel in den Innenraum eines Fahrzeuges geführt wird.

Eine solche Längswasserabdichtung ist aber auch für alle Anwendungen wichtig bei Verdrahtungssystemen auf Basis von Einzeladern, wo eine Längswasserabdichtung von elektrischen oder elektrotechnischen Komponenten erfolgen soll.

Der besondere Vorteil einer solchen Abdichtmethode ist die einfache Handhabung und Durchführung der Abdichtarbeiten, und es ist auch nur ein geringfügiger zusätzlicher Platzbedarf erforderlich.

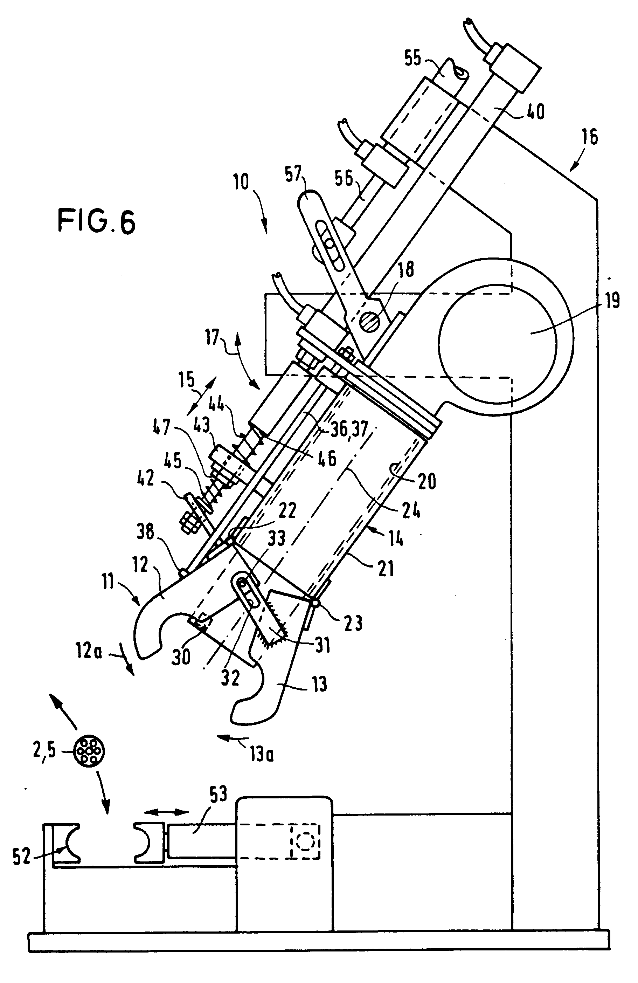

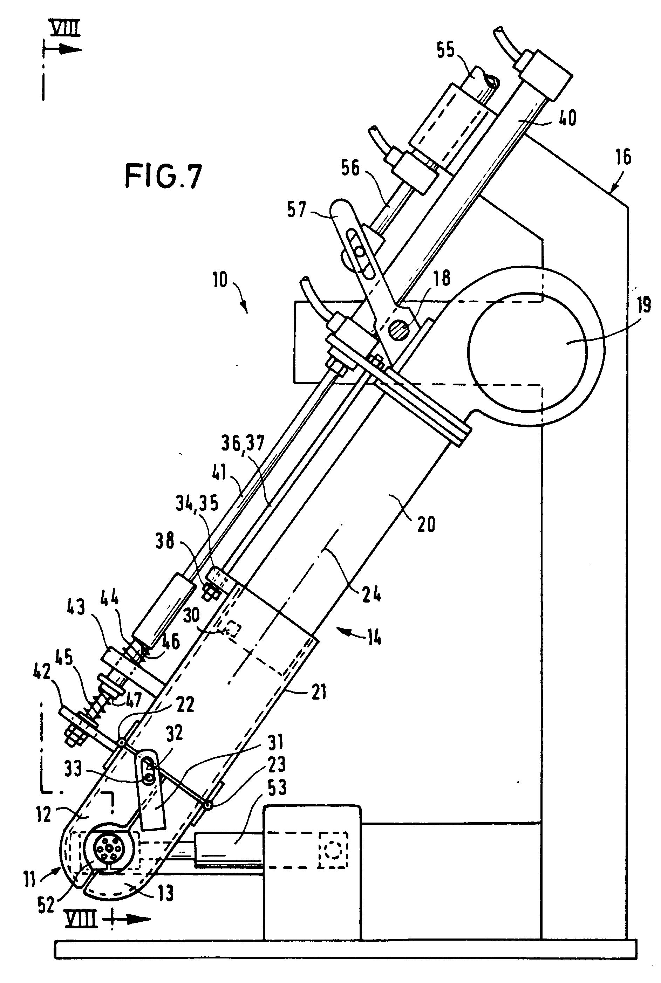

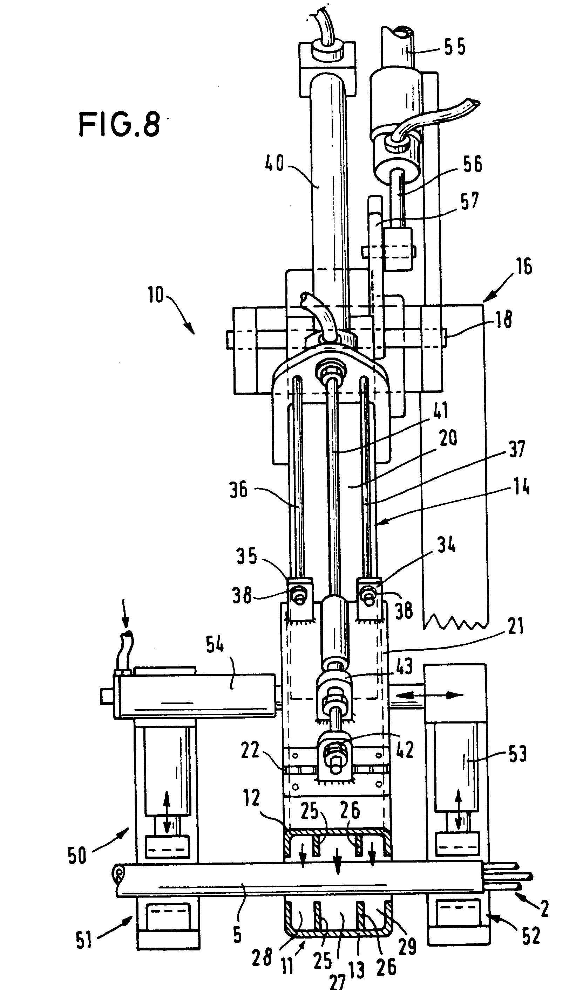

Wie in Fig. 6 bis 8 im einzelnen gezeigt ist, hat die zur Durchführung dieser Arbeiten dienende Vorrichtung 10 eine die Abdichtstelle an dem Kabelbündelabschnitt 2, 5 allseitig zangenartig umschließende Wärmekammer 11, deren Kammerteile 12, 13 am vorderen Ende eines Warmluftkanals 14 gegeneinander bewegbar angeordnet und mit dem Warmluftkanal aus einer Ruhestellung von Fig. 6 neben dem Kanalbündelabschnitt 2, 5 in eine Arbeitsstellung von Fig. 7 und 8 und aus dieser in die Ruhestellung von Fig. 6 wieder zurückbewegbar sind.

Die Wärmekammer 11 ist in Richtung des geraden Doppelpfeiles 15 von Fig. 6 aus der Ruhestellung in die Arbeitsstellung teleskopartig ausfahrbar, und sie ist außerdem gegenüber dem Maschinengestell 16 in Richtung des gebogenen Doppelpfeiles 17 von Fig. 6 mit dem Warmluftkanal 14 um eine zu dem zu behandelnden Kabelbündelabschnitt 2, 5 parallele Achse 18 schwenkbar gelagert.

Der Warmluftkanal 14 besteht aus einem mit einem Gebläse 19 fest verbundenen Heizrohr 20 und einem daran längsverschiebbar geführten Teleskoprohr 21, an dessen äußerem Ende die beiden Kammerteile 12, 13 der Wärmekammer 11 um parallele Achsen 22, 23 quer zur Längsachse 24 des Warmluftkanals 14 gegeneinander bewegbar gelagert sind. Die Kammerteile 12, 13 der Wärmekammer 11 sind durch trennoder Leitwände 25, 26 in mindestens drei koaxial zu dem Kabelbündelabschnitt 2, 5 nebeneinanderliegende Warmluftkanäle 27, 28, 29 derart unterteilt, daß der Kabelbündelabschnitt 2, 5 im mittleren Teil 27 der Wärmekammer 11 über seinen gesamten Umfang von einem heißeren Warmluftstrom umströmt ist, als in den daran seitlich angrenzenden Kammerteilen 28, 29.

Im Warmluftstrom ist vorzugsweise in unmittelbarer Nähe des zu behandelnden Kabelbündelabschnittes 2, 5 mindestens ein Temperaturfühler zur Steuerung der Heißlufttemperatur angeordnet, und die Kammerteile 12, 13 der Wärmekammer 11 sind als einander beiderseits des Kabelbündelabschnittes 2, 5 spiegelbildlich gegenüberliegende Backen ausgebildet und durch eine Mitnehmergabel 31 an der einen Backe 13 sowie einen in einen Schlitz 32 an der Mitnehmergabel eingreifenden Stift 33 zwangsweise zusammen- und auseinanderbewegbar miteinander verbunden.

Das Teleskoprohr 21 des Warmluftkanals 14 ist an dem Heizrohr 20 anschlagbegrenzt geführt, indem von dem Teleskoprohr 21 zwei zueinander parallele Führungsaugen 34, 35 aufragen, mit denen das Teleskoprohr 21 an zwei sich zu dem Heizrohr 20 parallel erstreckenden Führungsstangen 36, 37 geführt ist. Die Führungsstangen 36, 37 besitzen an ihrem freien Ende verstellbare Anschlagmuttern 38 oder andere geeignete Anschlagmittel, so daß die Ausfahrstrecke des Teleskoprohres 21 mit den daran schwenkbar gelagerten beiden Backen 12, 13 der Wärmekammer 11 aus der in Fig. 6 gezeigten Ruhestellung in die Arbeitsstellung von Fig. 7 und 8 genau eingestellt werden kann.

Für das teleskopartige Ausfahren der Wärmekammer 11 aus der Ruhestellung von Fig. 6 in die Arbeitsstellung von Fig. 7 und 8 und zum Öffnen und Schließen der Kammerbacken 12, 13 der Wärmekammer 11 ist achsparallel zu der Längsachse 24 des Warmluftkanals 14 bzw. zu der Längsachse des mit dem Gebläse 19 fest verbundenen Heizrohres 20 ein Hubzylinder 40 angeordnet, der mit seiner Kolbenstange 41 einerseits an einem von einer der beiden Kammerbacken 12 seitlich hervorstehenden Schwenkarm 42 und andererseits an einem von dem Teleskoprohr 21 des Warmluftkanals 14 seitlich hervorstehenden Mitnehmersteg 43 derart angreift, daß bei einer Betätigung des Hubzylinders 49 das Teleskoprohr 21 bei noch geöffneten Kammerbacken 12, 13 bis in seine Arbeitsstellung an den Endanschlägen der Führungsstangen 36, 37 für das Teleskoprohr 21 ausgefahren wird.

Erst nach Etreichen dieser Endstellung werden durch ein weiteres Ausfahren der Kolbenstange 41 des Hubzylinders 40 die Backen 12, 13 der Warmluftkammer 11 um den Kabelbündelabschnitt 2, 5 geschlossen.

Die Kolbenstange 41 des Hubzylinders 40 ist gegenüber dem Mitnehmersteg 43 des Teleskoprohres 21 beidseitig und gegenüber dem Schwenkarm 42 der Wärmekammer 11 in Schließrichtung (Pfeile 12a, 13a in Fig. 6) der Kammerteile 12, 13 abgefedert. Zu diesem Zweck sind beiderseits des Mitnehmersteges 43 an dem Teleskoprohr 21 des Warmluftkanals 14 Schraubendruckfedern 44, 45 auf der Kolbenstange 41 des Hubzylinders 40 angeordnet, von denen eine erste Schraubenfeder 44 sich zwischen einem Widerlagerflansch 46 an der Kolbenstange 41 und dem Mitnehmersteg 43 des Teleskoprohres 21 erstreckt, während eine zweite Schraubendruckfeder 45 auf der gegenüberliegenden Seite zwischen dem Schwenkarm 42 an der Wärmekammerbacke 12 und einem zweiten Widerlagerflansch 47 an der Kolbenstange 41 des Hubzylinders 40 angeordnet ist.

Die Wärmekammer 11 ist mit dem Warmluftkanal 14 und dem Gebläse 19 um eine gemeinsame, zu dem Kabelbündelabschnitt parallele Schwenkachse 18 bewegbar, und außerdem befindet sich beiderseits der Arbeitsstellung der Wärmekammer 11 eine Spannvorrichtung 50 mit Klemmbacken 51, 52 für den zu behandelnden Kabelbündelabschnitt 2, 5 (Fig. 8), von denen mindestens ein Backenpaar 52 mit seinem Druckzylinder 53 durch einen Spannzylinder 54 in Längsrichtung des Kabelbündels 2, 5 derart bewegbar ist, daß auf den mit dem Wärmeschrumpfschlauch 5 ummantelten Kabelbündelabschnitt 2 eine Streckbewegung ausgeübt werden kann.

Für die Schwenkbewegung der Wärmekammer 11 zusammen mit dem Warmluftkanal 14 und dem daran fest montierten Gebläse 19 um die Schwenkachse 18 an dem Maschinengestell 16 der Vorrichtung 10 ist ein weiterer Hubzylinder 55 vorgesehen, der gegebenenfalls auch wie der erste Hubzylinder 40 durch einen elektrischen Zahnstangenantrieb ersetzt werden kann und mit seiner Kolbenstange 56 über eine Schwenkgabel 57 oder dergleichen an der Wärmebehandlungsvorrichtung 10 angreift.

## Patentansprüche

1. Vorrichtung zur Wärmebehandlung von radialschrumpfenden Wärmeschrumpfschläuchen mit thermoplastischem Schmelzkleber zur stellenweisen Abdichtung von Kabelbündelabschnitten, insbesondere bei vorgefertigten Kabelbäumen im Fahrzeugbau, wobei das an der Abdichtungsstelle zwischen den Kabelsträngen (3) mit einem Schmelzklebereinsatz (4) versehene und mit einem Wärmeschrumpfschlauch (5) oder einer Wärme-Schrumpfkappe ummantelte Kabelbündel (2) erwämt wird, und wobei die Vorrichtung (10) eine die Abdichtstelle an dem Kabelbündelabschnitt (2, 5) allseitig zangenartig umschließende Wärmekammer (11) aufweist, deren Kammerteile (12, 13) gegeneinander schwenkbar angeordnet und aus einer Ruhestellung neben dem Kabelbündelabschnitt (2, 5) in eine Arbeitsstellung und aus dieser in die Ruhestellung wieder zurückbewegbar sind, **dadurch gekennzeichnet,** daß die Kammerteile (12, 13) der Wärmekammer (11) am vorderen Ende eines mit einem Gebläse (19) versehenen Warmluftkanals (14) angeordnet und mit dem Warmluftkanal mittels eines Hubzylinders (40) aus der Ruhestellung in die Arbeitsstellung an dem Kabelbündelabschnitt (2, 5) teleskopartig ausfahrbar sind.

2. Vorrichtung nach Anspruch 1, **dadurch gekennzeichnet,** daß die Wärmekammer (11) mit dem Warmluftkanal (14) um eine zum Kabelbündelabschnitt (2, 5) parallele Achse (18) schwenkbar gelagert ist.

3. Vorrichtung nach Anspruch 1 oder 2, **dadurch gekennzeichnet,** daß der Warmluftkanal (14) aus einem mit dem Gebläse (19) fest verbundenen Heizrohr (20) und einem daran längsverschiebbar geführten Teleskoprohr (21) besteht, an dessen äußerem Ende die beiden Kammerteile (12, 13) der Wärmekammer (11) um parallele Achsen (22, 23) quer zur Längsachse (24) des Warmluftkanals (14) gegeneinander bewegbar gelagert sind.

4. Vorrichtung nach einem oder mehreren der Ansprüche 1 bis 3, **dadurch gekennzeichnet,** daß die Kammerteile (12, 13) der Wärmekammer (11) durch Trennwände (25, 26) in mindestens drei koaxial zu dem Kabelbündelabschnitt (2, 5) nebeneinanderliegende Warmluftkanäle (27, 28, 29) derart unterteilt sind, daß der Kabelbündelabschnitt (2, 5) im mittleren Teil (27) der Wärmekammer (11) von einem heißeren Warmluftstrom umströmt ist als in den daran seitlich angrenzenden Bereichen.

5. Vorrichtung nach einem der Ansprüche 1 bis 4, **dadurch gekennzeichnet,** daß im Warmluftstrom vorzugsweise in der Nähe des zu behandelnden Kabelbündelabschnittes (2, 5) mindestens ein Temperaturfühler (30) zur Steuerung der Heißlufttemperatur angeordnet ist.

6. Vorrichtung nach einem der Ansprüche 1 bis 5, **dadurch gekennzeichnet,** daß die Kammerteile (12, 13) der Wärmekammer (11) als einander beiderseits des Kabelbündelabschnittes (2, 5) spiegelbildlich gegenüberliegende Backen ausgebildet und durch eine Mitnehmergabel (31) an der einen Backe (13) sowie einen in einen Schlitz (32) an der Mitnehmergabel (31) eingreifenden Stift (33) zwangsweise zusammen- und auseinanderbewegbar miteinander verbunden sind.

7. Vorrichtung nach einem der Ansprüche 3 bis 6, **dadurch gekennzeichnet,** daß das Teleskoprohr (21) des Warmluftkanals (14) an dem feststehenden Heizrohr (20) anschlagbegrenzt geführt ist.

8. Vorrichtung nach einem der Ansprüche 1 bis 7, **dadurch gekennzeichnet,** daß der Hubzylinder (40) für das teleskopartige Ausfahren der Wärmekammer (11) aus der Ruhe- in die Arbeitsstellung und zum Öffnen und Schließen der Kammerteile (12, 13) der Wärmekammer (11) achsparallel zu der Längsachse (24) des Warmluftkanals (14) angeordnet ist und mit seiner Kolbenstange (41) einerseits an einem von einem der beiden Kammerteile (12, 13) seitlich hervorstehenden Schwenkarm (42) und andererseits an einem von dem Teleskoprohr (21) des Warmluftkanals (14) seitlich hervorstehenden Mitnehmersteg (43) derart angreift, daß bei einer Betätigung des Hubzylinders (40) das Teleskoprohr (21) bei noch geöffneten Kammerteilen (12, 13) bis in die Arbeitsstellung an Endanschlägen (38) einer Führungseinrichtung (36, 37) für das Teleskoprohr (21) ausgefahren wird, und daß erst nach Erreichen dieser Endstellung durch weiteres Ausfahren der Kolbenstange (41) des Hubzylinders (40) die backenförmigen Kammerteile (12, 13) der Warmluftkammer (11) um den Kabelbündelabschnitt (2, 5) geschlossen werden.

9. Vorrichtung nach einem der Ansprüche 1 bis 8, **dadurch gekennzeichnet,** daß die Kolbenstange (41) des Hubzylinders (40) gegenüber dem Mitnehmersteg (43) des Teleskoprohres (21) beidseitig und gegenüber dem Schwenkarm (42) der Wärmekammer (11) in Schließrichtung der Kammerteile (12, 13) abgefedert ist.

10. Vorrichtung nach Anspruch 9, **dadurch gekennzeichnet,** daß beiderseits des Mitnehmersteges (43) an dem Teleskoprohr (21) des Warmluftkanals (14) Schraubendruckfedern (44, 45) auf der Kolbenstange (41) des Hubzylinders (40) angeordnet sind, von denen eine erste Schraubenfeder (44) sich zwischen einem Widerlagerflansch (46) an der Kolbenstange (41) und dem Mitnehmersteg (43) des Teleskoprohres (21) erstreckt und eine zweite Schraubendruckfeder (45) auf der gegenüberliegenden Seite zwischen dem Schwenkarm (42) an dem Kammerteil (12) und einem zweiten Widerlagerflansch (47) an der Kolbenstange (41) des Hubzylinders (40) angeordnet ist.

11. Vorrichtung nach einem der Ansprüche 1 bis 10, **dadurch gekennzeichnet,** daß beiderseits der Arbeitsstellung der Wärmekammer (11) Klemmbacken (51, 52) für den zu behandelnden Kabelbündelabschnitt (2, 5) angeordnet sind, von denen mindestens ein Backenpaar (52) in Längsrichtung des Kabelbündels (2, 5) derart bewegbar ist, daß auf den mit einem Wärmeschrumpfschlauch (5) ummantelten Kabelbündelabschnitt (2, 5) eine Streckbewegung ausgeübt wird.

## Claims

1. Apparatus for heat-treating radially shrinking heat-shrinkable tubes with thermoplastic hot-setting adhesive in order to seal points of cable bundle portions, in particular of prefabricated cable harnesses in vehicle construction, with the cable bundle (2), which is provided at the sealing point between the cable looms (3) with a hot-setting adhesive insert (4) and is sheathed in a heat-shrinkable tube (5) or a heat-shrinkable cover, being heated and with the apparatus (10) having a heat chamber (11) which in a pincer-like manner encloses the sealing point of the cable bundle portion (2, 5) on all sides and whose chamber parts (12, 13) are arranged so as to swivel towards one another and are movable out of a position of rest next to the cable bundle portion (2, 5) into a working position and out of said working position back into the position of rest, characterized in that the chamber parts (12, 13) of the heat chamber (11) are disposed at the front end of a hot-air duct (14) provided with a fan (19) and may with the hot-air duct be telescopically extended with the aid of a lifting cylinder (40) out of the position of rest into the working position at the cable bundle portion (2, 5).

2. Apparatus according to claim 1, characterized in that the heat chamber (11) with the hot-air duct (14) is supported so as to be capable of swivelling about an axis (18) parallel to the cable bundle portion (2, 5).

3. Apparatus according to claim 1 or 2, characterized in that the hot-air duct (14) comprises a heating tube (20), which is firmly connected to the fan (19) and on which is guided in a longitudinally displaceable manner a telescopic tube (21), on the outer end of which the two chamber parts (12, 13) of the heat chamber (11) are supported so as to be movable towards one another about parallel axes (22, 23) at right angles to the longitudinal axis (24) of the hot-air duct (14).

4. Apparatus according to one or more of claims 1 to 3, characterized in that the chamber parts (12, 13) of the heat chamber (11) are divided in such a manner by partition walls (25, 26) into at least three hot-air ducts (27, 28, 29) lying adjacent to one another coaxially to the cable bundle portion (2, 5) that a hotter hot air stream flows around the cable bundle portion (2, 5) in the central part (27) of the heat chamber (11) than in the regions laterally adjacent thereto.

5. Apparatus according to one of claims 1 to 4, characterized in that at least one temperature sensor (30) for controlling the hot-air temperature is disposed in the hot-air stream, preferably in the vicinity of the cable bundle portion (2, 5) to be treated.

6. Apparatus according to one of claims 1 to 5, characterized in that the chamber parts (12, 13) of the heat chamber (11) take the form of jaws lying opposite one another in a mirror-inverted manner on either side of the cable bundle portion (2, 5) and are connected to one another by a carrying fork (31) on the one jaw (13) and a pin (33), which engages into a slot (32) in the carrying fork (31), so as to be positively movable towards and away from one another.

7. Apparatus according to one of claims 3 to 6, characterized in that the telescopic tube (21) of the hot-air duct (14) is guided on the fixed heating tube (20) and limited by a stop.

8. Apparatus according to one of claims 1 to 7, characterized in that the lifting cylinder (40) for telescopically extending the heat chamber (11) out of the position of rest and into the working position and for opening and closing the chamber parts (12, 13) of the heat chamber (11) is disposed paraxially to the longitudinal axis (24) of the hot-air duct (14) and, with its piston rod (41), acts in such a manner on the one hand upon a swivel arm (42) projecting laterally from one of the two chamber parts (12, 13) and on the other hand upon a carrying web (43) projecting laterally from the telescopic tube (21) of the hot-air duct (14) that on actuation of the lifting cylinder (40), while the chamber parts (12, 13) are still open, the telescopic tube (21) is extended as far as into the working position against end stops (38) of a guide device (36, 37) for the telescopic tube (21), and that, only after attainment of said end position, are the jaw-like chamber parts (12, 13) of the hot-air chamber (11) closed around the cable bundle portion (2, 5) as a result of further extension of the piston rod (41) of the lifting cylinder (40).

9. Apparatus according to one of claims 1 to 8, characterized in that the piston rod (41) of the lifting cylinder (40) is spring-suspended on either side of the carrying web (43) of the telescopic tube (21) and in the direction of closure of the chamber parts (12, 13) as regards the swivel arm (42) of the heat chamber (11).

10. Apparatus according to claim 9, characterized in that, on either side of the carrying web (43) on the telescopic tube (21) of the hot-air duct (14), helical compression springs (44, 45) are disposed on the piston rod (41) of the lifting cylinder (40), of which a first helical spring (44) extends between an abutment flange (46) on the piston rod (41) and the carrying web (43) of the telescopic tube (21) and a second helical compression spring (45) is disposed on the opposite side between the swivel arm (42) on the chamber part (12) and a second abutment flange (47) on the piston rod (41) of the lifting cylinder (40).

11. Apparatus according to one of claims 1 to 10, characterized in that disposed on either side of the working position of the heat chamber (11) are clamping jaws (51, 52) for the cable bundle portion (2, 5) to be treated, of which at least one pair of jaws (52) is movable in a longitudinal direction of the cable bundle (2, 5) in such a way that a stretching motion is exerted upon the cable bundle portion (2, 5) sheathed in a heat-shrinkable tube (5).

## Revendications

1. Dispositif de traitement thermique de tuyaux thermo-rétractables, à retrait radial, avec un adhésif fusible thermoplastique destiné à assurer une étanchéité locale de tronçons de faisceaux de câbles, en particulier de faisceaux de câbles préfabriqués dans la construction de véhicules, le faisceau de câbles (2), pourvu, à l'endroit de l'étanchéité, entre les tronçons de câble (3), d'une garniture adhésive fusible (4) et enveloppé d'un tuyau thermo-rétractable (5) ou d'un capuchon thermo-rétractable étant chauffé et le dispositif (10) présentant une chambre de chauffage (11) entourant de toutes parts à la manière d'une pince, l'endroit de l'étanchéité, sur le tronçon de faisceau de câbles (2, 5), chambre de chauffage dont les éléments (12, 13) peuvent pivoter l'un par rapport à l'autre et passer d'une position de repos, ou ils se trouvent à côté du tronçon de faisceau de câbles (2, 5) en une position de travail et, depuis cette dernière, revenir en position de repos, caractérisé en ce que les parties de chambre (12, 13) de la chambre de chauffage (11) sont disposées à l'extrémité avant d'un canal à air chaud (14) pourvu d'une soufflante (19) et peuvent être déployées télescopiquement, avec le canal à air chaud, au moyen d'un vérin (40), pour passer de la position de repos à la position de travail, sur le tronçon de faisceau de câbles (2, 5).

2. Dispositif selon la revendication 1, caractérisé en ce que la chambre de chauffage (11) est montée pivotante avec le canal à air chaud (14), autour d'un axe (18) parallèle au tronçon de faisceau de câbles (2, 5).

3. Dispositif selon la revendication 1 ou 2, caractérisé en ce que le canal à air chaud (14) est composé d'un tube de chauffage (20) relié rigidement à la soufflante (19) et d'un tube télescopique (21), guidé de façon à pouvoir se déplacer longitudinalement sur celui-ci, à l'extrémité extérieure duquel, les deux parties de chambre (12, 13) de la chambre de chauffage (11) sont montées de façon à pouvoir pivoter l'une par rapport à l'autre, autour d'axes (22, 23) parallèles, transversalement par rapport à l'axe longitudinal (24) des canaux à air chaud (14).

4. Dispositif selon l'une ou plusieurs des revendications 1 à 3, caractérisé en ce que les parties de chambre (12, 13) de la chambre de chauffage (11) sont subdivisées, au moyen de parois de séparation (25, 26), en au moins 3 canaux à air chaud (27, 28, 29) placés les uns à côté des autres coaxialement par rapport au tronçon de faisceau de câbles (2, 5), de telle façon que le tronçon de faisceau de câbles (2, 5) soit enveloppé par l'écoulement d'un courant d'air chaud, dans la partie médiane (27) de la chambre de chauffage (11), ceci sous forme de zones leur étant latéralement limitrophes.

5. Dispositif selon l'une des revendications 1 à 4, caractérisé en ce qu'au moins une sonde de température (30) destinée à la commande/régulation de la température de l'air chaud est disposée dans le courant d'air chaud, de préférence à proximité du tronçon de faisceau de câbles (2, 5) à traiter,.

6. Dispositif selon l'une des revendications 1 à 5, caractérisé en ce que les parties de chambre (12, 13) de la chambre de chauffage (11) sont réalisées sous forme de mâchoires se faisant face, répondant à une symétrie spéculaire, des deux côtés du tronçon de faisceau de câbles (2, 5) et reliées ensemble au moyen d'une fourche d'entraînement (31) placée sur une première mâchoire (13), ainsi que d'une goupille (33) s'engageant dans une fente (32) ménagée sur la fourche d'entraînement (31), de façon à pouvoir se déplacer de façon forcée, dans un mouvement d'assemblage et d'écartement.

7. Dispositif selon l'une des revendications 3 à 6, caractérisé en ce que le tube télescopique (21) du canal à air chaud (14) est guidé sur le tube de chauffage (20) fixe, en étant limité par une butée.

8. Dispositif selon l'une des revendications 1 à 7, caractérisé en ce que le vérin (40) destiné au déploiement télescopique de la chambre de chauffage (11) devant opérer le passage de la position de repos à la position de travail et l'ouverture et la fermeture des parties de chambre (12, 13) de la chambre de chauffage (11) est disposé avec son axe parallèle à l'axe longitudinal (24) du canal à air chaud (14) et avec sa tige de piston (41), d'une part, sur un bras pivotant (42) faisant saillie latéralement de l'une des deux parties de chambre (12, 13) et, d'autre part, une patte d'entraînement (43) faisant saillie latéralement du tube télescopique (21) du canal à air chaud (14), en ce que, lors d'un actionnement du vérin (40), le tube télescopique (21), lorsque les parties de chambre (12, 13) sont encore ouvertes, est déployé pour passer en position de travail, en arrivant sur les butées finales (38) d'un dispositif de guidage (36, 37) destiné au tube télescopique (21) et en ce qu'ensuite, une fois atteinte cette position finale, par un déploiement supplémentaire, de la tige de piston (41) du vérin (40), les parties de chambre (12, 13) en forme de mâchoire de la chambre à air chaud (11) sont fermées autour de tronçons de faisceaux de câbles (2, 5).

9. Dispositif selon l'une des revendications 1 à 8, caractérisé en ce que la tige de piston (14) du vérin (40) est montée élastiquement par rapport à la patte d'entraînement (43) du tube télescopique (21), des deux côtés et par rapport au bras pivotant (42) de la chambre de chauffage (11), dans la direction de la fermeture des parties de chambre (12, 13).

10. Dispositif selon la revendication 9, caractérisé en ce que, des deux côtés de la tige d'entraînement (43), sont disposés, sur le tube télescopique (21) du canal à air chaud (14), des ressorts de pression hélicoïdaux (44, 45) montés sur la tige de piston (41) du vérin (40), dont un premier ressort hélicoïdal (44) s'étend entre une bride de contre-appui (46) réalisée sur la tige de piston (41) et la patte d'entraînement (43) du tube télescopique (21) et un deuxième ressort de pression hélicoïdal (45) est disposé sur le côté opposé, entre le bras pivotant (42) ménagé sur la partie de chambre (12) et une deuxième bride de contre-appui (47), réalisée sur la tige de piston (41) du vérin (40).

11. Dispositif selon l'une des revendications 1 à 10, caractérisé en ce que, des deux côtés de la position de travail de la chambre de chauffage (11), sont disposées des mâchoires de serrage (51, 52) destinées au tronçon de faisceau de câbles (2, 5) à traiter, dont au moins un couple de mâchoires (52) est déplaçable dans la direction longitudinale du faisceau de câbles (2, 5), de telle façon qu'un déplacement d'étirage est exercé sur les tronçons de faisceaux de câbles (2, 5) enveloppés par le tuyau thermo-rétractable (5).
